(19) Europäisches Patentamt / European Patent Office / Office européen des brevets

(11) **EP 1 757 959 A1**

(12) **EUROPEAN PATENT APPLICATION**
published in accordance with Art. 158(3) EPC

(43) Date of publication:
**28.02.2007 Bulletin 2007/09**

(51) Int Cl.:
**G02B 5/02** *(2006.01)*

(21) Application number: **05752998.4**

(22) Date of filing: **15.06.2005**

(86) International application number:
**PCT/JP2005/011392**

(87) International publication number:
**WO 2005/124400 (29.12.2005 Gazette 2005/52)**

(84) Designated Contracting States:
**DE**

(30) Priority: **16.06.2004 JP 2004177758**

(71) Applicant: **NIKON CORPORATION**
**Tokyo 100-8331 (JP)**

(72) Inventor: **TSUKAMOTO, Hiroyuki;**
**c/o NIKON CORPORATION,**
**1008331 (JP)**

(74) Representative: **HOFFMANN EITLE**
**Patent- und Rechtsanwälte**
**Arabellastrasse 4**
**81925 München (DE)**

(54) **DIFFRACTIVE DIFFUSION ELEMENT AND LIGHTING DEVICE**

(57)     Where n is the refractive index of the thin film 2, and d is the thickness of this thin film 2, respective substances may be considered to be formed on the surface of the substrate 1 with a thickness of d by a substance having a refractive index of n in the areas where the thin film 2 is left completely intact, with a thickness of d by a substance having a refractive index of 1 in the areas where the thin film 2 is completely removed, and with a thickness of d by a substance having a effective refractive index determined by the diameter of the cylinder and the thickness d of the thin film 2 in other areas. In actuality, the diffraction type diffusion element is divided not into 9 regions, but rather into numerous regions, with each part having a structure such as that shown in the figure, and with the effective refractive indices of the respective parts being different. Furthermore, a diffusion element which has the desired characteristics can be formed by varying the ratio of these different effective refractive indices.

Fig. 1

INCIDENT LIGHT

DIFFUSE LIGHT

**Description**

Technical Field

The present invention relates to a diffusion element which diffuses incident light to a desired intensity distribution by means of a diffraction effect, and utilizes this light, and an illumination device using this diffusion element.

Background Art

Diffusion elements (diffusion plates and the like) which convert incident light into diffuse light are widely used for purposes such as creating illuminating light that uniformly illuminates objects from incident light such as parallel light rays.

A method in which a random relief structure is created by cutting a flat plate by means of sand polishing or the like, and incident light is diffused using this structure, has been used for many years as a method for creating diffusion plates. However, diffusion plates manufactured by this method suffer from the following problem: namely, 0-order diffracted light that proceeds directly forward without being diffused is predominant, and it is difficult to create diffuse light having an intensity distribution that is other than circular. Furthermore, there are also drawbacks such as the tendency of speckles to be generated in the diffuse light.

In recent years, diffraction type diffusion plates have begun to be used as diffusion plates that overcome such drawbacks. Diffraction type diffusion plates are mainly diffusion plates in which a phase distribution is created in the transmitted light by forming step differences in the substrate, and it is attempted to create an intensity distribution in the emission angle as a result of the diffraction effect.

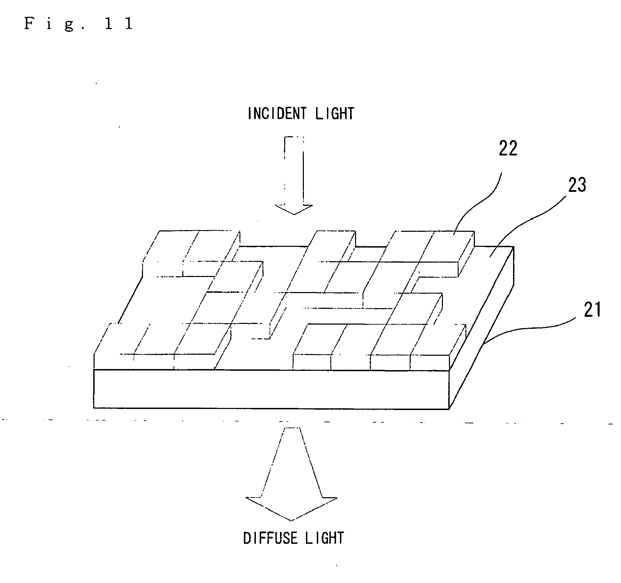

Figure 11 shows a model diagram of a case where a diffusion plate is constructed from a two-stage BOE (binary optical element). In Figure 11, protruding parts 22 and indented parts 23 are formed in a specified arrangement in a substrate 21, and a phase difference determined by the refractive index of the substrate 21 and the step differences between the protruding parts 22 and indented parts 23 is generated between the light that passes through the protruding parts 22 and the light that passes through the indented parts 23. Directly advancing light (0-order diffracted light) can be eliminated by controlling this phase difference and the distribution of the protruding parts 22 and indented parts 23.

Furthermore, since a Fourier transform of the phase distribution of the transmitted light forms a diffraction angle intensity distribution at a distance, a shape that allows the production of a desired diffraction angle intensity distribution can be created relatively easily.

However, in a diffraction type element, the wavelength dependence of the diffraction effect is great; accordingly, even if the desired performance can be obtained at the design wavelength, there is a problem in that the performance deteriorates at other wavelengths.

The causes of this deterioration include the following: first, since the conditions for eliminating 0-order diffracted light are not satisfied at wavelengths other than the design wavelength, a considerable amount of 0-order diffracted light is generated. Secondly, since the diffraction angle is substantially proportional to the wavelength, the long wavelength component shows a larger diffraction angle than the short wavelength component. With regard to the latter, if the plate is used in a location that is sufficiently separated from the element, the portion corresponding to the excess diffraction angle can also be eliminated by means of a diaphragm or the like; however, since this involves a loss of light, such a technique is undesirable.

For such reasons, it has been possible to use diffraction type diffusion elements only in cases where the object is a monochromatic light source or a light source with a narrow wavelength width.

Disclosure of the Invention

The present invention was devised in light of such circumstances; it is an object of the present invention to provide a diffraction type optical element which can suppress the 0-order diffracted light component at a plurality of wavelengths, and which can convert the distribution of the diffuse light other than 0-order diffracted light into a desired distribution at a plurality of wavelengths, and an illumination device using this diffraction type optical element.

The first invention that is used to achieve the object described above is a diffraction type diffusion element in which a relief structure is formed in the surface of a substrate or in a thin film formed on this substrate, and the light that is incident on this relief structure is converted into light having a desired diffracted light intensity distribution by forming a phase difference in the wave front of this light when the incident light passes through this relief structure, wherein the conditions

$$\Delta\lambda/\lambda_0 \geq 0.1$$

and

$$L \geq 1.5\lambda_0$$

are satisfied (where L is the maximum value of the difference in light path length of the light leaving this diffraction type diffusion element, and $\lambda_0 \pm \Delta\lambda$ is the object wavelength range of this diffraction type diffusion element).

As the light passes through the diffraction type diffusion element, 0-th order diffracted light can be reduced for desired plurality of wavelengths by generating adequate phase difference for each incident position. Since such a method is used in the present invention, 0-order diffracted light can be reduced over a specified wavelength range as a result, so that a diffusion element that can be used for light in a broad wavelength region can be realized.

Furthermore, the maximum value L of the difference in the light path length that is given when the light leaves from the diffraction type diffusion element is set at 1.5 times the center wavelength of the object light or greater. In an ordinary diffraction type diffusion element, the maximum value of the difference in the light path length of the light passing through this diffraction type diffusion element is about the same as or smaller than the wavelength. Since the phase is determined by $\phi = 2\pi L/\lambda_0$ (phase at $\phi = \lambda_0$), in such an element, when the phase distribution in the case of transmission at a certain wavelength within the wavelength band is set, the phase distribution at other wavelengths is uniquely determined. Since the diffraction intensity distribution is determined by the phase distribution, it is difficult to control the diffraction intensity distribution at a plurality of wavelengths under such conditions.

In the present invention, on the other hand, there are a plurality of light path lengths that give the same transmitted phase. In such cases, a degree of freedom remains in the distribution of the light path length even when the transmitted phase distribution at a certain wavelength is set, and this can be utilized to control the diffraction intensity distribution at other wavelengths. Accordingly, the diffraction intensity distribution can be set as the desired distribution while suppressing 0-order diffracted light at a plurality of wavelengths.

Such an effect increases as the maximum value of the difference in the light path length increases. However, in order to manipulate the diffraction intensity distribution to some extent, it is necessary to set the difference L in the light path length at a value that is at least 1.5 times the center wavelength of the object light. Furthermore, in cases where the original band that is used is narrow, there is little need to use the present invention; accordingly, the wavelength range used in the present invention is limited to the range of $\Delta\lambda/\lambda_0 \geq 0.1$. In an ordinary diffraction element, in cases where $\Delta\lambda/\lambda_0 = 0.1$, a difference in diffraction angle of approximately 10% and a difference in relative intensity distribution of approximately 20% are possible at the ends of the wavelength band compared to the center; therefore, the present invention is effective in cases where the extent of the wavelength band is greater than this.

The second invention that is used to achieve the object described above is the first invention, wherein the method that is used to apply a phase difference to the wave front of the light when the light passes through the relief structure is a method in which a relief structure whose dimension in the direction perpendicular to the direction of light passage is equal to or less than the object wavelength is provided in the substrate surface or the thin film, so that the effective refractive index of this portion is varied.

In a diffraction type optical element, methods for applying a phase difference to the light that passes through various portions of the element include a method in which the thicknesses of various parts of the substrate or thin film are varied, and a method in which the effective refractive indices of various parts of the substrate or thin film are varied. Of these two methods, the former method suffers from the following problem: namely, if the difference in the light path length is increased, there is considerable generation of an unwanted diffraction effect in the corner parts of the indentations and projections, so that the element performance drops.

Accordingly, the latter method is used in the present invention; here, as the method for varying the effective refractive index, a method is used in which a relief structure whose dimension in the direction perpendicular to the direction of light passage is equal to or less than the object wavelength is provided in the substrate or thin film.

If a relief structure with dimensions equal to or less than the object wavelength is provided, the nature of a two-dimensional photonic crystal appears, so that the effective refractive index varies in accordance with the relief structure. Such a relief structure can be formed using lithography; accordingly, manufacture is easy.

The third invention that is used to achieve the object described above is the second invention, wherein the thickness of the substrate or thin film that is formed by the relief structure is formed with two stages.

That the thickness of the substrate or thin film is formed with two stages means that when the surface of the substrate or thin film is formed with projecting parts or indented parts, respective indented parts or projecting parts corresponding to these stages are provided, and that the depth of the indented parts or projecting part or height of the projecting parts provided is constant. Such a structure with indented and projecting parts can be formed by a single etching operation using a lithographic process; accordingly, this is useful for shortening the manufacturing process and achieving a high degree of precision.

The fourth invention that is used to achieve the object described above is a diffraction type diffusion element which is formed using two of any of the first through third inventions, wherein two substrates in which a relief structure is provided in the surface of the substrate or a thin film formed on the substrate, and the surface on the opposite side from the surface on which the relief structure is provided is a flat surface are joined so that the surfaces on which the relief structures are formed are caused to face each other.

In the first through third inventions, since it is necessary to create a large phase difference in the wavelength that passes through, there may be cases in which the depth or height of the relief structure is large. Furthermore, in cases where the cross-sectional dimensions of the relief structure are small (e.g., in cases where these dimensions are equal to or less than the wavelength of the light), the resulting structure which thus has a small cross-sectional area and a large height (in the case of indented parts, the dimensions of the corresponding projecting parts are also reduced) is easily damaged. Therefore, in the present invention, a single diffraction type diffusion element is formed by joining two substrates or thin films which have a flat surface on one side of the substrate or thin film and a relief structure on the other side so that the surfaces on which a relief structure is formed are caused to face each other. As a result, a diffraction type diffusion element can be constructed which is strong in structural terms, and in which a large phase difference is created in the wavelength of the light that passes through.

The fifth invention that is used to achieve the object described above is any of the first through fourth inventions, wherein the relief structure is formed so that the diffracted light intensity distributions at a plurality of object wavelengths are all optimal.

The first through fourth inventions have the function of controlling the diffraction distribution over a broad wavelength band. Accordingly, rather than a monochromatic design, a design which is such that the distribution is simultaneously optimized at a plurality of wavelengths is possible. Consequently, such a construction is desirable.

The sixth invention that is used to achieve the object described above is the first invention, wherein a reflective layer is constructed between the substrate and the thin film.

The seventh invention that is used to achieve the object described above is a diffraction type diffusion element in which the surface on which the relief structure is formed in the first invention and the surface on which the reflective layer is formed in a separate substrate having a reflective layer formed on the surface are disposed facing each other.

The eighth invention that is used to achieve the object described above is an illumination device which uses the diffraction type diffusion element of any of the first through seventh inventions.

In the present invention, highly efficient diffuse illumination with little loss can be achieved in a broad wavelength band using a simple structure.

Brief Description of the Drawings

Figure 1 is a model diagram showing the structure of a diffraction type diffusion element constituting one working configuration of the present invention.

Figure 2 is a graph showing the relationship between the cylinder diameter and the effective refractive index in this structure as calculated by the FDTD method.

Figure 3 is a graph comparing the 0-order diffracted light ratio in a working configuration of the present invention with two-stage and four-stage BOE diffusion elements.

Figure 4 is a plan view showing an example of the shape of a diffraction type diffusion element constituting a working configuration of the present invention designed by the simulated annealing method.

Figure 5 is a diagram showing the diffraction intensity distribution at a distance of 40 cm to the rear of the element in a case where a plane wave is caused to be incident on the diffraction type diffusion element shown in Figure 4.

Figure 6 is a diagram showing Figure 5, in which the diffraction intensity distribution of the diffraction type diffusion element shown in Figure 4 is indicated by the diffracted light distribution and brightness on the surface of the element, from the standpoint of the intensity distribution with respect to the diffraction angle.

Figure 7 is a diagram showing the diffraction intensity distribution at a distance of 40 cm to the rear of the element in a case where a plane wave is caused to be incident on a diffraction type diffusion element designed with a maximum light path length difference of 0.55 $\mu$m.

Figure 8 is a diagram showing the diffraction intensity distribution at a distance of 40 cm to the rear of the element in a case where a plane wave is caused to be incident on a diffraction type diffusion element designed with a maximum light path length difference of 2.2 $\mu$m.

Figure 9A is a diagram showing Figure 7, in which the diffraction intensity distribution of a diffraction type diffusion element designed with a maximum light path length difference of 0.55 $\mu$m is indicated by the diffracted light distribution and brightness on the surface of the element, from the standpoint of the intensity distribution with respect to the diffraction angle.

Figure 9B is a diagram showing Figure 8, in which the diffraction intensity distribution of a diffraction type diffusion element designed with a maximum light path length difference of 2.2 $\mu$m is indicated by the diffracted light distribution and brightness on the surface of the element, from the standpoint of the intensity distribution with respect to the diffraction angle.

Figure 10 is a model diagram showing the structure of a diffraction type diffusion element constituting another working configuration of the present invention.

Figure 11 is a model diagram showing a case in which a diffusion plate is constructed by a two-stage BOE (binary optical element).

Best Mode for Carrying Out the Invention

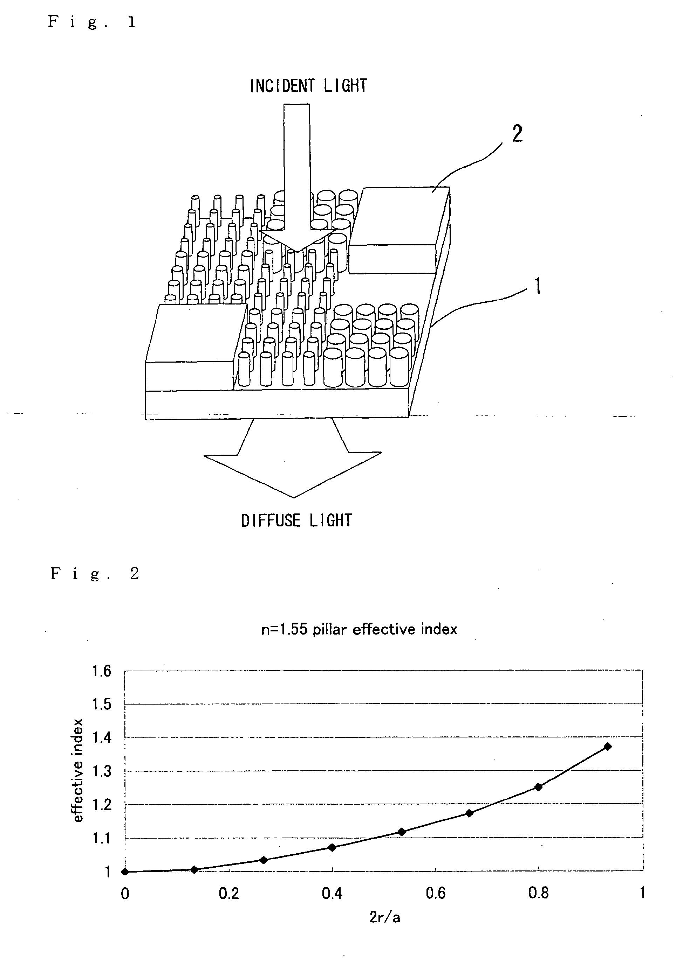

Working configurations of the present invention will be described below. Figure 1 is a model diagram showing the structure of a diffraction type diffusion element constituting one working configuration of the present invention. This diffraction type diffusion element is an element in which a thin film 2 is formed on the surface of a substrate 1, and a shape with indentations and projections is formed by removing a portion of this thin film 2 by a photolithographic process. Furthermore, as will be described later, it is also possible to form a relief structure in the surface of a resin substrate by manufacturing a mold using a photolithographic process, and pressing this mold onto a resin, or using injection-molding.
In the figure, the diffraction type diffusion element is divided into nine parts; in two of these parts, the thin film 2 remains intact as formed without being etched. In one part, the thin film 2 is completely removed. In the remaining six parts, cylindrical projecting parts are formed, with 16 of these projecting parts being formed in each of the six parts. The thickness of these cylinders differs in respective portions. The pitch of the cylinders is shorter than the wavelength used.
In a diffraction type diffusion element having such a structure, where n is the refractive index of the thin film 2, and d is the thickness of this thin film 2, respective substances may be considered to be formed on the surface of the substrate 1 with a thickness of d by a substance having a refractive index of n in the areas where the thin film 2 is left completely intact, with a thickness of d by a substance having a refractive index of 1 in the areas where the thin film 2 is completely removed, and with a thickness of d by a substance having a refractive index determined by the diameter of the cylinder and the thickness d of the thin film 2 in other areas.
In actuality, as will be described later, the diffraction type diffusion element is divided not into 9 regions, but rather into numerous regions, with each part having a structure such as that shown in Figure 1, and with the effective refractive indices of the respective parts being different. Furthermore, as will be described later, a diffraction type diffusion element which has the desired characteristics can be formed by varying the ratio of these different effective refractive indices.
A concrete example of simulation will be described below. Here, a diffraction type diffusion plate is constructed which can be used at wavelengths of 460 to 660 nm, which accounts for most visible light.
The constituent material (corresponding to the thin film 2) is a resin with a refractive index of 1.55, and a fine cylindrical structure is formed here in which the pitch of the fine structure (corresponding to the pitch of the cylindrical projecting parts) is 280 nm. The maximum value of the transmission light path length difference is set at 1.1 $\mu$m, which is approximately twice the center wavelength of 560 nm. Since the maximum refractive index difference created by this resin and air is 0.55, it is necessary that the height of this structure be 2.0 $\mu$m or greater.
Here, since it is difficult to manufacture a structure which has a height of 2.0 $\mu$m, a structure with a height of 2.0 $\mu$m is created by preparing two substrates that have a structure with a height of 1.0 $\mu$m on the surface, and causing the structure sides of these substrates to adhere tightly to each other. The size (surface shape) of the respective effective refractive index regions is a square shape which is 1.96 $\mu$m on a side. Here, such regions are arranged in a 64 $\times$ 64

array, thus constructing a diffraction type diffusion element having a size of approximately 125 μm × 125 μm.

Figure 2 shows the relationship between the cylinder diameter and effective refractive index in this structure as calculated by the FDTD method. In Figure 2, the horizontal axis indicates 2r/a (r is the radius of the cylinders, and a is the pitch of the cylindrical structures), and the vertical axis indicates the effective refractive index.

Here, the following five stages of effective refractive indices are used as the cylindrical shape: 0 (i.e., a state in which the resin has been completely removed by etching), 170 nm, 220 nm, 237 nm and ∞ (i.e., a state in which the resin is left intact without being etched). Table 1 shows the relationship between the respective cylinder diameters and effective refractive index.

(Table 1)

| Cylinder diameter (nm) | Effective refractive index |
|---|---|
| 0 | 1 |
| 170 | 1.15 |
| 220 | 1.24 |
| 237 | 1.29 |
| ∞ | 1.55 |

As was described above, since a diffraction type diffusion element is formed by causing two such structures to adhere tightly to each other, regions with 15 different light path lengths ranging from 0 to 1.10 μm as shown in Table 2 can be created (according to combined calculations). An element is constructed by combining these at the composition ratios shown in Table 2.

(Table 2)

| Light path length (μm) | Composition ratio | Light path length (μm) | Composition ratio | Light path length (μm) | Composition ratio |
|---|---|---|---|---|---|
| 0.00 | 0.072 | 0.15 | 0.072 | 0.24 | 0.072 |
| 0.29 | 0.072 | 0.30 | 0.072 | 0.39 | 0.058 |
| 0.44 | 0.072 | 0.48 | 0.043 | 0.53 | 0.072 |
| 0.55 | 0.072 | 0.58 | 0.079 | 0.70 | 0.072 |
| 0.79 | 0.072 | 0.84 | 0.065 | 1.10 | 0.036 |

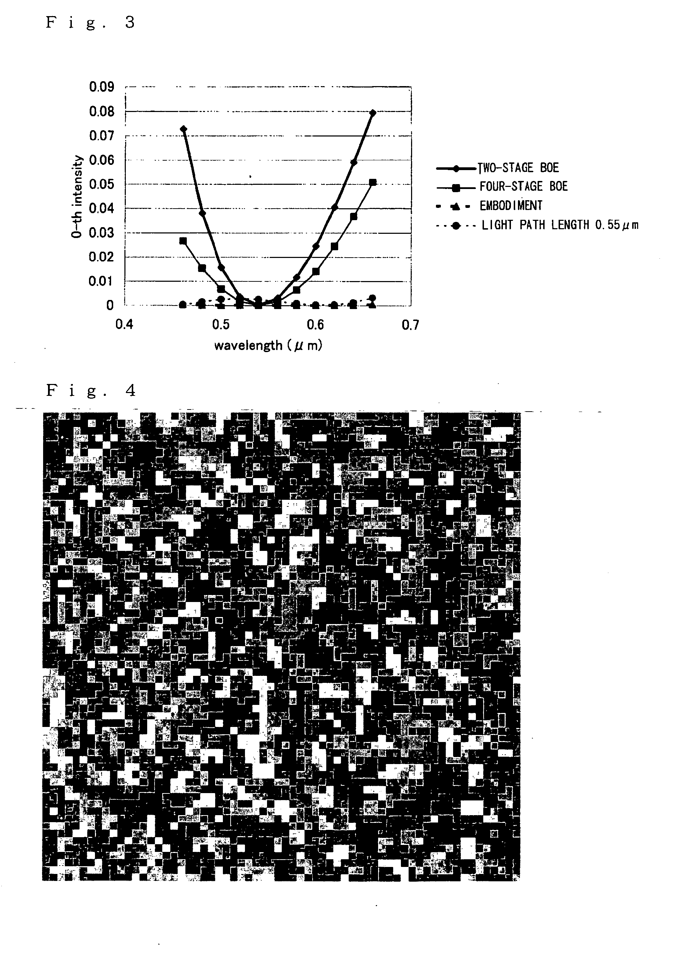

By determining the composition ratios in this way, it is possible to suppress directly advancing light (0-order diffracted light) over the entire wavelength band. Figure 3 shows a comparison of the 0-order diffracted light ratio produced by this construction with two-stage and four-stage BOE diffusion elements. In Figure 3, the horizontal axis indicates the wavelength, and the vertical axis indicates the intensity of the 0-order diffracted light. In two-stage and four-stage BOE diffusion elements, the design is such that 0-order light is eliminated at a wavelength of 560 nm. However, as the wavelength that is used shifts from this design wavelength, the proportion of 0-order diffracted light increases. On the other hand, in the diffraction type diffusion element constituting the present working configuration (indicated as the embodiment in Figure 3), 0-order light is suppressed substantially to 0 over the entire wavelength region of 460 to 660 nm that is used.

In the manufacture of such a diffraction type diffusion element, patterning and etching are first performed on a substrate made of Si or the like, so that a structure in which circular holes are lined up is produced. This can be manufactured using an exposure apparatus with an ArF light source, and dry etching. Then, the desired structure can be manufactured by transferring this to a synthetic resin. The adhesion of the structure can be accomplished using the unit region size of 1.96 μm as a standard rather than the fine structure pitch of 280 nm; accordingly, this is not particularly difficult.

The diffraction intensity distribution can be varied by rearranging these regions. In the design of an actual element, it is necessary to optimize the diffraction distribution at a plurality of wavelengths. One example of a method for accomplishing this is the simulated annealing method.

For example, the sum of the squares of the shifts from the ideal values of the diffraction intensity distribution in the three colors R, G and B is used as an optimization parameter. The element surface is divided into an equally spaced grid, and the composition ratios of the respective light path length regions are set at specified values as an initial condition. Then, two regions on the element are exchanged, and the change in the parameter values before and after this exchange is observed. In cases where the parameter values increase (worsen) when thus exchanged, the exchanged regions are returned to the original state with the following probability in accordance with the amount of change ΔE in the parameter:

$$P = 1 - \exp(-\Delta E/T)$$

Here, T is a variable used for optimization control. The values of the optimization parameters can be reduced, thus producing a structure which is optimized so that the diffraction intensity distribution approaches an ideal value, by repeating such an operation so that the value of T is gradually reduced.

Furthermore, in cases where there are many types of transmission phases as in this design example, the effects of the phase changes in the respective regions cancel each other, so that there tends not to be any great variation in the distribution due to minute variations in the wavelength. Accordingly, in the case of the parameters of the present embodiment, if optimization is performed for the three colors R, G and B, the distribution does not show much variation in intermediate wavelength regions, either.

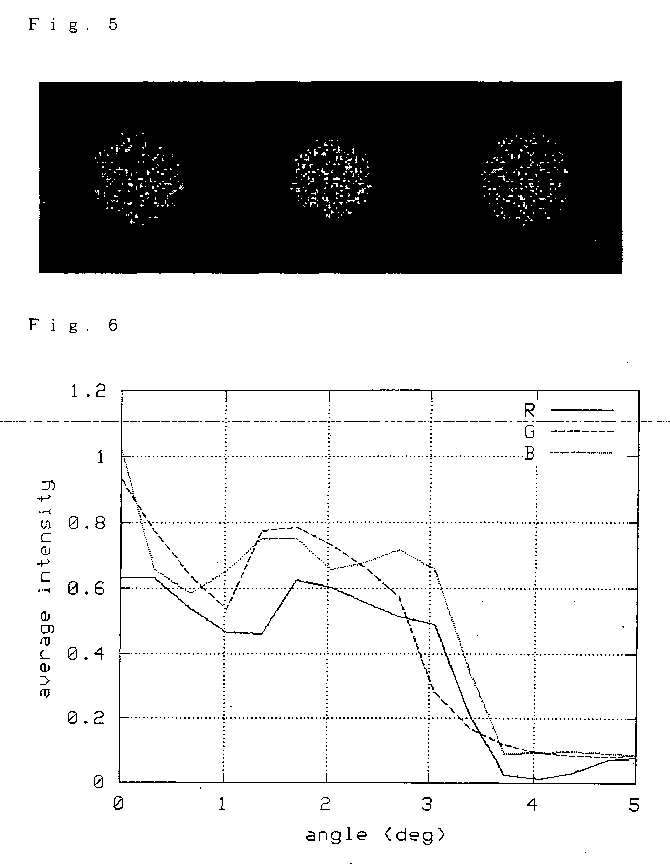

An example of the shape of a diffraction type diffusion element designed in this way is shown in Figure 4. Here, the in-plane distribution of the light path length difference is expressed by color. Next, the diffraction intensity distribution at a distance of 40 cm to the rear of the element in a case where a plane wave is caused to be incident on this diffraction type diffusion element is shown in Figure 5. This Figure 5 was determined by Fresnel diffraction calculations utilizing the effective refractive index. R, G and B are the respective distributions at wavelengths of 630 nm, 545 nm and 480 nm. Furthermore, in Figures 5, 7 and 8 below, the respective circles indicate R, G and B (from the left).

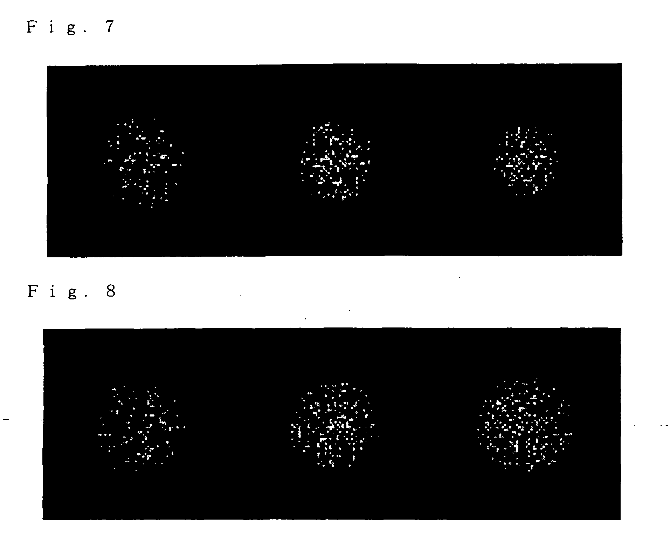

Ideally, the intensity distributions in R, G and B are uniform circular shapes. Furthermore, the beam diameter corresponding to the diffusion angle is equal in R, G and B. In Figure 7, the beam shape is shaped into a circular shape at the respective wavelengths. Moreover, the beam diameter is slightly smaller in the case of G, but is substantially equal in the case of R and B. A variation in brightness is seen at the respective wavelengths; however, this is not enough to cause problems in terms of the performance of the diffusion element.

In order to make a comparison, the maximum value of the light path length difference was set at 0.55 μm and 2.2 μm, and design was performed using the same method. The composition ratios of the regions corresponding to the respective light path differences in a case where the maximum value of the light path length difference was set at 0.55 μm are shown in Table 3.

(Table 3)

| Light path length (μm) | Composition ratio | Light path length (μm) | Composition ratio | Light path length (μm) | Composition ratio |
|---|---|---|---|---|---|
| 0.00 | 0.206 | 0.075 | 0.015 | 0.120 | 0.015 |
| 0.145 | 0.015 | 0.150 | 0.015 | 0.195 | 0.044 |
| 0.220 | 0.015 | 0.240 | 0.015 | 0.265 | 0.059 |
| 0.275 | 0.206 | 0.290 | 0.029 | 0.350 | 0.088 |
| 0.395 | 0.015 | 0.420 | 0.029 | 0.550 | 0.235 |

The ratio of directly advancing light in this example is also shown in Figure 4 (indicated as a light path length of 0.55 μm in Figure 4). 0-order diffracted light is increased compared to a case where the maximum light path length is 1.1 μm; however, directly advancing light is suppressed over the entire wavelength band.

Figure 6 is a diagram showing Figure 5, in which the diffraction intensity distribution of the diffraction type diffusion element shown in Figure 4 is indicated by the diffracted light distribution and brightness on the surface of the element, from the standpoint of the intensity distribution with respect to the diffraction angle. The intensity with respect to the diffraction angle is the mean value of the diffraction intensity at the same diffraction angle distributed on the surface of the element.

It is seen from Figure 6 that the diffraction type diffusion element of the present working configuration shows little variation in the intensity distribution with respect to the diffraction angle among the three wavelengths, so that control of the diffusion angle can be accomplished over a broad wavelength band.

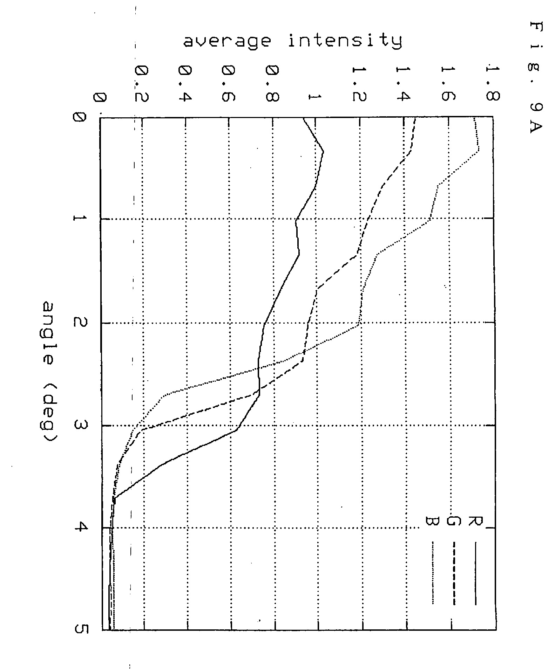

Examples of the diffraction intensity distribution in cases where the maximum light path length difference is 0.55 $\mu$m or 2.2 $\mu$m are respectively shown in Figures 7 and 8. In the example where the maximum light path length difference is 0.55 $\mu$m, as is seen from an examination of Figure 7, the diffraction distribution can hardly be controlled; therefore, the diameter of the distribution expands in a manner that is substantially proportional to the wavelength. Specifically, as a result of the effect of the invention of a previous application, 0-order diffracted light can be reduced over the wavelength region that is used (as is shown in Figure 3); however, since the conditions of the present invention are not satisfied, it is indicated that the diffusion angle differs according to the wavelength used.

On the other hand, in the example where the maximum light path length difference is 2.2 $\mu$m, as is seen from an examination of Figure 8, since the degree of freedom in design is large, the diffusion angle substantially coincides in all R, G and B. Thus, the diffraction intensity can be controlled by applying a light path length difference that is larger than the center wavelength used (1.5 times the center wavelength used or greater).

A photonic crystal type structure is used in the examples described above. However, even if a photonic crystal type structure is not used, it goes without saying that the diffraction type diffusion element of the present invention can also be manufactured by creating a light path length variation by partially varying the thickness of the substrate in multiple stages using the same method as that used in a conventional BOE.

In the illumination device constituting a working configuration of the present invention, light emitted from a white LED, for example, is converted into parallel light by a lens system, and is then caused to be incident on the diffraction type diffusion element of the present invention. As a result, diffuse light can be obtained which contains little 0-order light, and which shows no variation in the diffusion angle according to the wavelength used. Such a light source can be used as a uniform illumination light source which shows little color distribution at the surface that is illuminated.

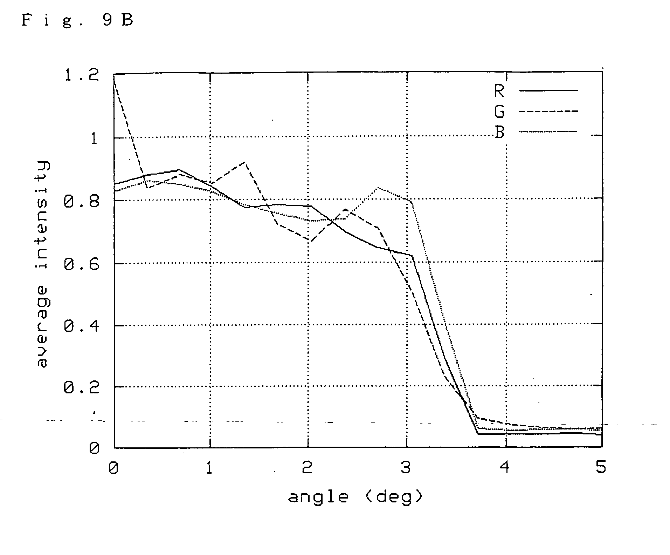

Figures 9A and 9B are diagrams showing Figures 7 and 8, in which the diffraction intensity distribution of the diffraction type diffusion element is indicated by the diffracted light distribution and brightness at the surface of the element, from the standpoint of the intensity distribution with respect to the diffraction angle. Figure 9A shows the diffraction intensity distribution of a diffraction type diffusion element designed with a maximum light path length difference of 0.55 $\mu$m, and Figure 9B shows the diffraction intensity distribution of a diffraction type diffusion element designed with a maximum light path length difference of 2.2 $\mu$m.

Next, a diffraction type diffusion element constituting another working configuration of the present invention will be described.

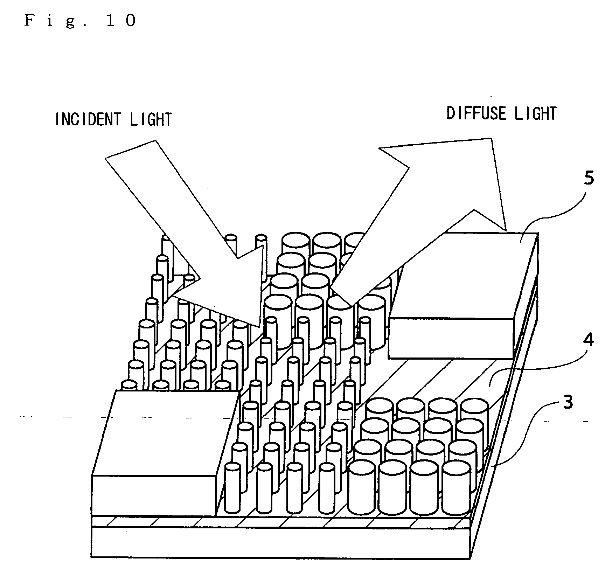

Figure 10 is a model diagram showing the structure of a diffraction type diffusion element constituting another working configuration of the present invention. In this diffraction type diffusion element, a metal film (e.g., Al or the like) or a dielectric multilayer reflective film 4, and a transparent thin film (e.g., a synthetic resin) 5 are successively formed on the surface of a substrate 3, and indentations and projections are formed by removing portions of this thin film by a photolithographic process. Furthermore, it would also be possible to form a diffraction type diffusion element in which a transparent thin film (e.g., a synthetic resin) is formed on the surface of a transparent substrate, indentations and projections are formed by removing portions of this thin film by a photolithographic process, a substrate having a metal film or dielectric multilayer reflective film formed thereon is prepared, and the surface with indentations and projections and the metal film or like are joined facing each other.

The former element is used by causing light to be incident from the surface on which the relief structure is formed, and reflecting this light by the metal film or dielectric multilayer reflective film after the light has passed through the relief structure. The latter element is used by causing light to be incident from the surface of the transparent substrate, and reflecting this light by the metal film or dielectric multilayer reflective film after this light has passed through the relief structure.

Furthermore, the light is reflected by the metal film or dielectric multilayer film, so that this light makes a round trip. However, the relief structure and reflective surface are disposed in as close proximity to each other as possible in order to ensure that the forward path and return path pass through the same locations.

As was described above, the actual diffraction type diffusion element is divided into numerous regions, and numerous cylindrical projecting parts are also formed.

A concrete example will be described below. Here, as in the working configurations described above, a diffraction type diffusion plate that can be used at wavelengths of 460 nm to 660 nm is constructed.

As was described above, the constituent material (thin film 5) has a refractive index of 1.55, and fine cylindrical structures are formed here with the pitch of the fine structures (corresponding to the pitch of the cylindrical projecting parts) set at 280 nm. The maximum value of the reflective light path length difference is set at 1.1 $\mu$m, which is approximately twice the center wavelength of 560 nm. Since the maximum refractive index difference created by this thin film 5 and air is 0.55, it is necessary that the height of this structure be 2.0 $\mu$m or greater.

In the case of a diffraction type diffusion element for transmission use as described above, a structure with a height of 2.0 $\mu$m is formed by preparing two substrates on which a structure with a height of 1.0 $\mu$m is formed, and causing these substrates to adhere tightly to each other so that the structure surfaces face each other. However, in the case of a diffraction type diffusion element for reflective use, since the light passes through the element twice, performance which is the same as that of an element in which the light passes through a structure with a height of 2.0 $\mu$m can be realized even if the height of the cylinders is 1.0 $\mu$m. As will be described later, however, 15 types of effective refractive index regions must be formed on the substrate in order to ensure performance that is substantially the same as that of a diffraction type diffusion element for transmission use.

The size (surface shape) of the respective effective refractive index regions is a square shape which is 1.96 $\mu$m on a side. Here, such regions are arranged in a 64 $\times$ 64 array, thus constructing a diffraction type diffusion element having a size of approximately 125 $\mu$m $\times$ 125 $\mu$m.

The relationship between the cylinder diameter and the effective refractive index in this structure as calculated by the FDTD method is as shown in Figure 2. Here, 15 effective refractive indices for cylinder diameters of 0, 120, 153, 168, 171, 196, 208, 220, 228, 232, 237, 260, 279, 290 and $\infty$ are employed.

This diffraction type diffusion element is meant for reflective use; accordingly, considering that the incident light passes through the element twice, this is an element with 15 types of different light path length regions ranging from 0 to 1.1 $\mu$m, and the corresponding composition ratios, as shown in Table 4.

(Table 4)

| Cylinder diameter (nm) | Effective refractive index | Light path length ($\mu$m) | Composition ratio |
| --- | --- | --- | --- |
| 0 | 1 | 0 | 0.072 |
| 120 | 1.075 | 0.15 | 0.072 |
| 153 | 1.12 | 0.24 | 0.072 |
| 168 | 1.145 | 0.29 | 0.072 |
| 171 | 1.15 | 0.3 | 0.072 |
| 196 | 1.195 | 0.39 | 0.058 |
| 208 | 1.22 | 0.44 | 0.072 |
| 220 | 1.24 | 0.48 | 0.043 |
| 228 | 1.265 | 0.53 | 0.072 |
| 232 | 1.275 | 0.55 | 0.072 |
| 237 | 1.29 | 0.58 | 0.079 |
| 260 | 1.35 | 0.7 | 0.072 |
| 279 | 1.395 | 0.79 | 0.072 |
| 290 | 1.42 | 0.84 | 0.065 |
| $\infty$ | 1.55 | 1.1 | 0.036 |

Furthermore, since the pitch of the relief structure (distance between adjacent cylinders) is 280 nm, when the relief structure is viewed from the upper surface, a state in which the adjacent circles contact each other is seen when the cylinder diameter is 280 nm, and a state in which portions of the adjacent circles overlap is seen when the cylinder diameter exceeds 280 nm.

A method similar to that described above may be used as the method for varying the diffraction intensity distribution by rearranging the regions of the effective refractive index distribution.

If a diffraction type diffusion element for reflective use is manufactured using such a construction, it goes without saying that results (effects) similar to those of the diffraction type diffusion element for transmission use described above can be obtained.

## Claims

1. A diffraction type diffusion element in which a relief structure is formed in the surface of a substrate or in a thin film formed on this substrate, and the light that is incident on this relief structure is converted into light having a desired diffracted light intensity distribution by forming a phase difference in the wave front of this light when the incident light passes through this relief structure, wherein the conditions

$$\Delta\lambda/\lambda_0 \geq 0.1$$

and

$$L \geq 1.5\lambda_0$$

are satisfied (where L is the maximum value of the difference in light path length of the light leaving this diffraction type diffusion element, and $\lambda_0 \pm \Delta\lambda$ is the object wavelength range of this diffraction type diffusion element).

2.  The diffraction type diffusion element according to Claim 1, wherein the method that is used to apply a phase difference to the wave front of the light when the light passes through the relief structure is a method in which a relief structure whose dimension in the direction perpendicular to the direction of light passage is equal to or less than the object wavelength is provided in the substrate surface or the thin film, so that the effective refractive index of this portion is varied.

3.  The diffraction type diffusion element according to Claim 2, wherein the thickness of the substrate or thin film that is formed by the relief structure is formed with two stages.

4.  A diffraction type diffusion element which is formed using two of the diffraction type diffusion elements according to Claim 1, wherein two substrates in which a relief structure is provided in the surface of the substrate or a thin film formed on the substrate, and the surface on the opposite side from the surface on which the relief structure is provided is a flat surface are joined so that the surfaces on which the relief structures are formed are caused to face each other.

5.  The diffraction type diffusion element according to Claim 1, wherein the relief structure is formed so that the diffracted light intensity distributions at a plurality of object wavelengths are all optimal.

6.  The diffraction type diffusion element according to Claim 1, wherein a reflective layer is constructed between the substrate and the thin film.

7.  A diffraction type diffusion element in which the surface on which the relief structure of the diffraction type diffusion element according to Claim 1 is formed and the surface on which the reflective layer is formed in a separate substrate having a reflective layer formed on the surface are disposed facing each other.

8.  An illumination device which uses the diffraction type diffusion element according to Claim 1.

9.  An illumination device which uses the diffraction type diffusion element according to Claim 7.

F i g .  1

INCIDENT LIGHT

2

1

DIFFUSE LIGHT

F i g .  2

n=1.55 pillar effective index

F i g. 3

F i g. 4

F i g .  5

F i g .  6

F i g . 7

F i g . 8

F i g . 9 A

F i g . 9 B

Fig. 10

INCIDENT LIGHT

DIFFUSE LIGHT

5

4

3

Fig. 11

INCIDENT LIGHT

22

23

21

DIFFUSE LIGHT

## INTERNATIONAL SEARCH REPORT

| | International application No. |
|---|---|
| | PCT/JP2005/011392 |

**A. CLASSIFICATION OF SUBJECT MATTER**
Int.Cl⁷ G02B5/02

According to International Patent Classification (IPC) or to both national classification and IPC

**B. FIELDS SEARCHED**

Minimum documentation searched (classification system followed by classification symbols)
Int.Cl⁷ G02B5/02

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 1-302332 A  (Canon Inc.),<br>06 December, 1989 (06.12.89),<br>Full text; all drawings<br>& US 5161058 A | 1<br>2,3<br>4-9 |
| Y<br>A | JP 2004-61905 A  (Keio University),<br>26 February, 2004 (26.02.04),<br>Full text; all drawings<br>(Family: none) | 1-3<br>4-9 |
| A | JP 4-159524 A  (Canon Inc.),<br>02 June, 1992 (02.06.92),<br>Full text; all drawings<br>& US 5124839 A | 1-9 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 August, 2005 (03.08.05) | 23 August, 2005 (23.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/011392

C (Continuation).   DOCUMENTS CONSIDERED TO BE RELEVANT

| Category* | Citation of document, with indication, where appropriate, of the relevant passages | Relevant to claim No. |
|---|---|---|
| A | JP 3-31802 A  (Canon Inc.),<br>12 February, 1991 (12.02.91),<br>Full text; all drawings<br>& US 5189454 A | 1-9 |
| A | JP 2000-321626 A  (Minolta Co., Ltd.),<br>24 November, 2000 (24.11.00),<br>Full text; all drawings<br>& US 6516152 B1 | 1-9 |
| A | JP 2-226202 A  (Canon Inc.),<br>07 September, 1990 (07.09.90),<br>Full text; all drawings<br>& US 5089835 A | 1-9 |

Form PCT/ISA/210 (continuation of second sheet) (January 2004)